# EUROPÄISCHE PATENTSCHRIFT

(11) **EP 3 257 353 B1**
(45) Veröffentlichungstag und Bekanntmachung des Hinweises auf die Patenterteilung: **25.09.2019**
(21) Anmeldenummer: 17154725.0
(22) Anmeldetag: 06.02.2017
(51) Int. Cl.: A01D 69/02

(54) **LANDWIRTSCHAFTLICHE ARBEITSMASCHINE UND VERFAHREN ZUM BETRIEB EINER LANDWIRTSCHAFTLICHEN ARBEITSMASCHINE**
AGRICULTURAL MACHINE AND METHOD FOR OPERATING AN AGRICULTURAL MACHINE
MACHINE AGRICOLE ET PROCEDE DE FONCTIONNEMENT D'UNE MACHINE AGRICOLE

(30) Priorität: 14.06.2016 DE 102016110837
(43) Veröffentlichungstag der Anmeldung: 20.12.2017
(73) Patentinhaber: CLAAS Selbstfahrende Erntemaschinen GmbH, 33428 Harsewinkel (DE)
(72) Erfinder: Fischer, Frédéric, 59823 Arnsberg (DE); Kriebel, Bastian, 48155 Münster (DE); Kettelhoit, Boris, 33335 Gütersloh (DE); Sprigade, Daniel, 59427 Unna (DE); Heymann, Philipp, 59519 Möhnesee Wamel (DE); Tetzlaff, Sebastian, 74235 Erlenbach (DE)
(74) Vertreter: CLAAS Gruppe

(56) Entgegenhaltungen:
- EP-A1- 1 563 724
- EP-A1- 2 778 003
- DE-A1-102007 019 156
- US-A1- 2014 283 492

## Beschreibung

Die vorliegende Erfindung betrifft eine landwirtschaftliche Arbeitsmaschine gemäß dem Oberbegriff von Anspruch 1 und ein Verfahren zum Betrieb einer landwirtschaftlichen Arbeitsmaschine gemäß dem Oberbegriff von Anspruch 12.

Unter einer landwirtschaftlichen Arbeitsmaschine wird jegliche Form von Arbeitsfahrzeug verstanden, das insbesondere mit einem eigenen Fahrantrieb (Antriebsachse mit Antriebsrädern) versehen ist, aber alternativ auch als Fahrzeug ohne eigenen Antrieb, beispielsweise als Hänger, ausgebildet sein kann. Nur beispielhaft erwähnt seien als landwirtschaftliche Arbeitsmaschinen Mähdrescher, Feldhäcksler oder Schlepper mit Anbauten wie Düngerstreuer, Sämaschinen, Spritzeinrichtungen, Wender, Schwader oder dergleichen.

Auf dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Komponente der Arbeitsmaschine verstanden. Neben den vorgenannten Anbauten sind dies beispielsweise Haspel, Schneidwerk, Dreschwerk, Fördereinrichtungen (Förderschnecke oder -band), Hubwerke (Front- oder Heckhubwerk) oder dergleichen.

Während der Fahrt eines Mähdreschers durch den Feldbestand wird beispielsweise dessen Haspel und Schneidwerk betrieben. Außerdem wird das Schnittgut über Förderschnecken und -bänder durch einen Einzugskanal transportiert, wobei das Schnittgut auch ein Dreschwerk durchläuft. Die einzelnen Komponenten werden im Bedarfsfall automatisch zugeschaltet oder getrennt. Beispielsweise ist denkbar, dass, wenn ein Mähdrescher in einen Feldbestand hineinfährt, ein Fronthubwerk mit daran angeordneter Haspel und Schneidwerk abgesenkt wird und Haspel, Schneidwerk, Förderschnecken und -bänder sowie Dreschwerk eingeschaltet werden. Beim Ausfahren aus dem Feldbestand oder bei einer Wende ist es wiederum denkbar, dass Haspel, Schneidwerk, Förderschnecken und -bänder sowie Dreschwerk ausgeschaltet und das Fronthubwerk mit daran angeordneter Haspel und Schneidwerk angehoben wird.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsgeräte und den Fahrantrieb auf. Als einziger Energiespeicher dient der Verbrennungskraftmaschine ein Kraftstofftank.

Es sind auch Arbeitsmaschinen bekannt (EP 1 563 724 A1), die neben einer als Hauptmaschine betriebenen Verbrennungskraftmaschine noch eine separate elektrische Hilfsmaschine in Form einer Elektromaschine aufweisen. Diese dient ausschließlich dazu, dass der Fahrer der landwirtschaftlichen Arbeitsmaschine im Bedarfsfall die Systemleistung kurzzeitig um die Leistungsfähigkeit der Elektromaschine steigern kann (sogenannter Boost-Betrieb).

Die bekannten landwirtschaftlichen Arbeitsmaschinen verfügen außerdem über ein oftmals von Bleiakkus gespeistes 12 V- oder 24 V-Bordnetz, über das die Spannungsversorgung der Fahrzeugbeleuchtung und von Elektronikkomponenten erfolgt. Zu letzteren zählen unter anderem Steuergeräte, Sensoren, Anzeigeleuchten, Displays und Aktoren wie Scheibenwischermotor, Anlasser und in einem Mähdrescher zum Beispiel der Linearantrieb zur Einstellung der Siebweite. Die elektrische Energie des Bordnetzes ist relativ begrenzt. Es lässt sich auch keine Energie in großem Umfang Zwischenspeichern. Folglich ist die Energieversorgung einer landwirtschaftlichen Arbeitsmaschine allein von der Hauptmaschine, das heißt von der Verbrennungskraftmaschine, und besonders dessen Charakteristik bzw. Motorkennlinie abhängig.

Bereits heute ist es das Ziel, (teil-)automatisierte Arbeitsmaschinen mit einer möglichst konstanten Motordrehzahl zu betreiben, um Kraftstoff zu sparen und Schadstoffemissionen zu verringern.

Für den Fahrer ist es grundsätzlich möglich, die Auslastung des Motors anhand des Drehzahlgeräusches zu bewerten. Die Reaktion des Fahrers erfolgt aber immer zeitverzögert, zum einen aufgrund seiner eigenen Reaktionszeit, zum anderen aufgrund der Komplexität des Ernteprozesses. Bemerkt der Fahrer beispielsweise einen Einbruch der Drehzahl bedingt durch eine bestimmten Menge an Schnittgut im Dreschwerk, kann sich bereits ein noch größerer Anteil an Schnittgut im vorangehenden Abschnitt des Einzugskanals befinden, so dass sich die Gutflussdichte im Dreschwerk schneller erhöht als der Fahrer gegensteuern kann.

Die Folge ist, dass sich der Betriebspunkt (Arbeitspunkt; definiert durch die voreingestellte Drehzahl und das voreingestellte Drehmoment an der Abtriebswelle) der Verbrennungskraftmaschine ungewollt in einen ungünstigen Bereich verschiebt, bevor der Fahrer reagieren kann. Oder aber der Fahrer reagiert mit einer zu großen Erhöhung der Drehzahl. Beides kann sich negativ auf den Kraftstoffverbrauch und die Schadstoffemissionen, aber auch auf den Ernteprozess auswirken. Unter Umständen geht, wenn der Fahrer zu langsam oder falsch reagiert, der Motor sogar aus ("stirbt ab") und muss, nachdem die Arbeitsaggregate wieder in einen gangbaren Zustand gebracht worden sind, neu gestartet werden. Kurzzeitige Lastschwankungen können mit den herkömmlichen Arbeitsmaschinen folglich nicht in zufriedenstellender Weise ausgeglichen werden.

Der Erfindung liegt das Problem zugrunde, die bekannte Arbeitsmaschine dahingehend weiterzubilden, dass kurzzeitige Lastschwankungen besser ausgeglichen werden, um die Verbrennungskraftmaschine stets in einem günstigen Betriebspunkt zu halten.

Das obige Problem wird gemäß einer ersten Lehre der Erfindung bei einer landwirtschaftlichen Arbeitsmaschine gemäß dem Oberbegriff von Anspruch 1 durch die Merkmale des kennzeichnenden Teils von Anspruch 1, sowie ein Verfahren gemäß dem kennzeichnenden Teil des Anspruchs 12 gelöst.

Die landwirtschaftliche Arbeitsmaschine, bei der es sich insbesondere um eine Erntemaschine wie einen Mähdrescher oder Feldhäcksler handelt, weist mindestens einen Leistungsverbraucher auf, beispielsweise ein Arbeitsaggregat und einen Fahrantrieb, sowie eine Antriebsanordnung, die neben einer Verbrennungskraftmaschine eine speziell angesteuerte Hilfsmaschine aufweist.

Die insbesondere rotatorische Verbrennungskraftmaschine bildet beispielsweise eine Hauptmaschine der landwirtschaftlichen Arbeitsmaschine, also einen im Betrieb der Arbeitsmaschine ständig Leistung abgebenden Antrieb, und die insbesondere ebenfalls rotatorische Hilfsmaschine einen im Betrieb der Arbeitsmaschine nur vorübergehend im Bedarfsfall Leistung abgebenden Antrieb.

Vorschlagsgemäß weist die Antriebsanordnung ferner eine Regeleinrichtung auf, die die Hilfsmaschine derart regelt, dass bei insbesondere voreingestellter von der Verbrennungskraftmaschine abgegebener Leistung und bei variierendem Leistungsbedarf des mindestens einen Leistungsverbrauchers die Drehzahl oder das Drehmoment an einer Abtriebswelle der Verbrennungskraftmaschine auf einen voreingestellten Wert oder Wertebereich gehalten wird, wobei Landwirtschaftliche Arbeitsmaschine, insbesondere Erntemaschine, wobei eine Antriebsanordnung (9) mit einer Verbrennungskraftmaschine (10) und einer Hilfsmaschine (11) vorgesehen ist und wobei mindestens ein Leistungsverbraucher (5, 7) vorgesehen ist, der von der Antriebsanordnung (9) antreibbar ist, dadurch gekennzeichnet, dass die Antriebsanordnung (9) eine Regeleinrichtung (15) aufweist, die die Hilfsmaschine (11) derart regelt, dass bei variierendem Leistungsbedarf des mindestens einen Leistungsverbrauchers (5,7) die Drehzahl oder das Drehmoment an einer Abtriebswelle (16) der Verbrennungskraftmaschine (10) auf einen voreingestellten Wert oder Wertebereich gehalten wird, wobei die Regeleinrichtung (15) die Hilfsmaschine (11) so regelt, dass die Hilfsmaschine (11) einer lastwechselbedingten Änderung der Drehzahl an der Abtriebswelle (16) der Verbrennungskraftmaschine (10) in der Weise entgegenwirkt, dass bei einem Abfall der Drehzahl an der Abtriebswelle (16) der Verbrennungskraftmaschine (10) die Hilfsmaschine (11) eine Erhöhung der Drehzahl an der Abtriebswelle (16) der Verbrennungskraftmaschine (10) bewirkt und dass die Regeleinrichtung (15) derart konfiguriert ist, dass sie die Hilfsmaschine (11) als elektrischen Generator betreibt, sobald die Drehzahl an der Abtriebswelle (16) der Verbrennungskraftmaschine (10) lastwechselbedingt ansteigt.
Die Hilfsmaschine wird gemäß der Ausgestaltung nach Anspruch 3, insbesondere indem die Regeleinrichtung entsprechend konfiguriert ist, so geregelt, dass die Hilfsmaschine einer lastwechselbedingten Änderung der Drehzahl an der Abtriebswelle der Verbrennungskraftmaschine entgegenwirkt. Eine solche lastwechselbedingte Änderung ergibt sich aus Lastwechseln, die von dem mindestens einen Leistungsverbraucher ausgehen. Im Einzelnen bewirkt bei einem Anstieg der Drehzahl an der Abtriebswelle der Verbrennungskraftmaschine die Hilfsmaschine eine Verringerung der Drehzahl an der Abtriebswelle der Verbrennungskraftmaschine, wobei die Hilfsmaschine dann insbesondere als elektrischer Generator betrieben wird. Zusätzlich oder alternativ kann auch vorgesehen sein, dass bei einem Abfall der Drehzahl an der Abtriebswelle der Verbrennungskraftmaschine die Hilfsmaschine eine Erhöhung der Drehzahl an der Abtriebswelle der Verbrennungskraftmaschine bewirkt. In letzterem Fall erfolgt die Spannungsversorgung der Hilfsmaschine insbesondere durch einen Energiespeicher, der insbesondere von dem oder den Energiespeichern des Bordnetzes der Arbeitsmaschine unabhängig ist. Bei dem Energiespeicher handelt es sich insbesondere um denselben Energiespeicher, in dem die durch den Generatorbetrieb der Hilfsmaschine erzeugte Energie gespeichert wird.

Insbesondere ist die Regeleinrichtung gemäß Anspruch 1 derart konfiguriert ist, dass sie die Hilfsmaschine als elektrischer Generator betreibt, sobald die Drehzahl an der Abtriebswelle der Verbrennungskraftmaschine ansteigt. Auf diese Weise kann der Energiespeicher, der zur Spannungsversorgung der Hilfsmaschine dient, wenn diese dem ersten Teilantriebsstrang Leistung zuführen soll, zwischendurch wieder zumindest teilweise aufgeladen werden. Dabei kann die Regeleinrichtung die Hilfsmaschine so regeln, dass diese nur dann dem ersten Teilantriebsstrang Leistung zuführt, wenn der Ladezustand (State of Charge) des Energiespeichers oberhalb von 40%, bevorzugt oberhalb von 50%, besonders bevorzugt oberhalb von 60%, der gesamten Ladekapazität des Energiespeichers liegt.

Es ist auch denkbar, dass die Werte positiver und negativer Lastspitzen eines variierenden Leistungsbedarfs des oder der Arbeitsaggregate über einen vorgegebenen ersten Zeitraum addiert werden und bei einer Abweichung der Summe von dem Wert Null die Drehzahl oder das Drehmoment oder der Betriebspunkt der Verbrennungskraftmaschine so angepasst wird, dass die Summe aus den Werten positiver und negativer Lastspitzen über einen vorgegebenen, dem ersten Zeitraum nachfolgenden zweiten Zeitraum wieder Null ergibt. Auf diese Weise wird für verschiedene Belastungsfälle jeweils automatisch ein optimierter Betriebspunkt der Verbrennungskraftmaschine eingestellt.

Die Hilfsmaschine kann insbesondere so geregelt werden, dass ein vorgegebener Betriebspunkt der Verbrennungskraftmaschine, der durch eine vorgegebene Drehzahl und ein vorgegebenes Drehmoment an der Abtriebswelle der Verbrennungskraftmaschine definiert ist, bei variierendem Leistungsbedarf des ersten Leistungsverbrauchers erreicht oder beibehalten wird. Die vorgegebene Drehzahl und das vorgegebene Drehmoment sind insbesondere so gewählt, dass die Verbrennungskraftmaschine in dem entsprechenden Betriebspunkt besonders wenig Kraftstoff verbraucht, besonders schadstoffarm betrieben wird und gleichzeitig mit einer bestimmten Leistung unterhalb der Maximalleistung, beispielsweise mit der Nennleistung, betrieben wird.

Die Leistung bzw. der Betriebspunkt wird insbesondere auch dann beibehalten, wenn es zu Drehzahl- oder Drehmomentschwankungen aufgrund eines variierenden Leistungsbedarfs des Fahrantriebs kommt. Ein Grund für solche Schwankungen ist beispielsweise vorübergehender Schlupf der Antriebsräder auf dem Untergrund oder eine plötzliche Steigung oder ein plötzlicher Abfall im Gelände. Diese Schwankungen werden aber allein durch die Verbrennungskraftmaschine ausgeglichen, indem diese im Bedarfsfall Drehzahl oder Drehmoment anpasst.

Unabhängig davon kann es, wenn die Arbeitsmaschine in dem vorgegebenen Betriebspunkt betrieben wird, dazu kommen, dass ein Arbeitsaggregat (z.B. Transportband im Einzugskanal, Dreschtrommel, Häckslertrommel etc.) einen erhöhten Leistungsbedarf hat, beispielsweise bedingt durch eine plötzlich erhöhte Gutflussdichte im Einzugskanal oder Dreschwerk. Der erhöhte Leistungsbedarf des Arbeitsaggregats wird beispielsweise automatisch dadurch erkannt, dass sich die Drehzahl der Antriebswelle des jeweiligen Arbeitsaggregats verringert oder das auf diese Antriebswelle wirkende Drehmoment erhöht. Die Hilfsmaschine kann dann so geregelt werden, dass sie der Abtriebswelle der Verbrennungskraftmaschine und dadurch auch der Antriebswelle des Arbeitsaggregats Leistung zuführt. Dies bewirkt, dass sich die Drehzahl der Abtriebswelle der Verbrennungskraftmaschine und dadurch die der Antriebswelle des Arbeitsaggregats automatisch wieder auf den vorherigen Wert erhöht bzw. das auf die Antriebswelle wirkende Drehmoment wieder auf den vorherigen Wert verringert. Durch diese Unterstützung durch die Hilfsmaschine kann die Verbrennungskraftmaschine im Idealfall konstant in dem vorgegebenen Betriebspunkt betrieben werden oder, wenn es doch zu einer geringfügigen Abweichung von diesem Betriebspunkt kommen sollte, sofort wieder in den Betriebspunkt gebracht werden. "Sofort" bedeutet dabei, dass die Regelung ohne zeitliche Verzögerung, insbesondere ohne zeitliche Verzögerung durch den Fahrer, ab dem Zeitpunkt des Erfassens einer Drehzahl- oder Drehmomentänderung an der Antriebswelle des jeweiligen Arbeitsaggregats beginnt.

Grundsätzlich ist auch der umgekehrte Fall denkbar, bei dem das Arbeitsaggregat einen verminderten Leistungsbedarf hat, beispielsweise bedingt durch eine plötzlich verringerte Gutflussdichte im Einzugskanal oder Dreschwerk, wenn die Arbeitsmaschine zum Beispiel in einen weniger dichten Feldbestand fährt. Der verringerte Leistungsbedarf des Arbeitsaggregats wird beispielsweise automatisch dadurch erkannt, dass sich die Drehzahl der Antriebswelle des jeweiligen Arbeitsaggregats erhöht oder das auf diese Antriebswelle wirkende Drehmoment verringert. Die Hilfsmaschine kann dann so geregelt werden, dass sie der Abtriebswelle der Verbrennungskraftmaschine Leistung nimmt und dadurch die an der Antriebswelle des Arbeitsaggregats zur Verfügung stehende Leistung verringert. Dies bewirkt, dass sich die Drehzahl der Abtriebswelle der Verbrennungskraftmaschine und dadurch die der Antriebswelle des Arbeitsaggregats automatisch wieder auf den vorherigen Wert verringert bzw. das auf die Antriebswelle wirkende Drehmoment wieder auf den vorherigen Wert erhöht. Die Hilfsmaschine wird dann insbesondere als elektrischer Generator betrieben, der die Abtriebswelle der Verbrennungskraftmaschine abbremst, wobei die dadurch erzeugte Energie auch gespeichert werden kann. Durch diese Maßnahme der Hilfsmaschine kann die Verbrennungskraftmaschine im Idealfall ebenfalls konstant in dem vorgegebenen Betriebspunkt betrieben werden oder, wenn es doch zu einer geringfügigen Abweichung von diesem Betriebspunkt kommen sollte, sofort wieder in den Betriebspunkt gebracht werden.

Über das Bordnetz, beispielsweise 12 V- oder 24 V-Bordnetz, der Arbeitsmaschine erfolgt insbesondere die Spannungsversorgung unter anderem der Fahrzeugbeleuchtung und der Elektronikkomponenten (z.B. Steuergeräte, Sensoren, Anzeigeelemente und/oder Aktoren, insbesondere Elektromotoren etc.). Die mit dem Bordnetz verbundenen Komponenten sind von den Leistungsverbrauchern, also insbesondere den Arbeitsaggregaten und dem Fahrantrieb, verschieden und werden bevorzugt über einen separaten Energiespeicher, insbesondere einen oder mehrere Akkumulatoren, beispielsweise Bleiakkus, versorgt.

Gemäß der Ausgestaltung nach Anspruch 3 ist der Leistungsverbraucher bzw. einer der Leistungsverbraucher ein Arbeitsaggregat der Arbeitsmaschine, das insbesondere gewählt ist aus der Gruppe umfassend linear angetriebene, insbesondere hydraulisch angetriebene, Arbeitsaggregate und rotatorisch angetriebene, insbesondere riemengetriebene, Arbeitsaggregate. Ein Beispiel für ein linear angetriebenes Arbeitsaggregat ist das Fronthubwerk eines Mähdreschers, das auch die Haspel und das Schneidwerk trägt. Ein Beispiel für ein rotatorisch angetriebenes Arbeitsaggregat ist die Fördereinrichtung, mit der das Schnittgut zum Dreschwerk gefördert wird. Auch die Dreschtrommel des Derschwerks ist ein rotatorisch angetriebenes Arbeitsaggregat.

Die landwirtschaftliche Arbeitsmaschine kann erfindungsgemäß mit einem eigenen Fahrantrieb versehen sein, aber alternativ auch als Fahrzeug ohne eigenen Antrieb, beispielsweise als Hänger, ausgebildet sein. In einer Ausgestaltung weist die Arbeitsmaschine also einen zweiten Leistungsverbraucher auf (Anspruch 4), der insbesondere von einem Fahrantrieb der Arbeitsmaschine, der eine Antriebsachse und/oder Antriebsräder umfassen kann, gebildet wird.

Gemäß der Ausgestaltung nach Anspruch 5 ist ferner vorgesehen, dass die Hilfsmaschine an einen Antriebsstrang der Antriebsanordnung angekoppelt ist, der zum Ausleiten von Antriebsleistung der Verbrennungskraftmaschine an den oder die Leistungsverbraucher konfiguriert ist. Der Antriebsstrang weist gemäß Anspruch 6 mindestens zwei, bevorzugt mindestens drei, Teilantriebsstränge auf, von denen ein erster Teilantriebsstrang zum Übertragen von Antriebsleistung der Verbrennungskraftmaschine an den ersten Leistungsverbraucher, insbesondere das Arbeitsaggregat, konfiguriert ist und/oder ein zweiter Teilantriebsstrang zum Übertragen von Antriebsleistung der Verbrennungskraftmaschine an den zweiten Leistungsverbraucher, insbesondere den Fahrantrieb, konfiguriert ist und/oder ein dritter Teilantriebsstrang zum Austausch von Antriebsleistung zwischen der Verbrennungskraftmaschine und der Hilfsmaschine konfiguriert ist. "Austausch" meint, dass über den dritten Teilantriebsstrang entweder Antriebsleistung von der Verbrennungskraftmaschine an die Hilfsmaschine oder von der Hilfsmaschine an die Verbrennungskraftmaschine übertragen wird.

Bei der Hilfsmaschine handelt es sich gemäß der Ausgestaltung nach Anspruch 7 um eine Elektromaschine. Die Hilfsmaschine ist vorzugsweise Bestandteil eines Hybridsystems, wobei das Hybridsystem insbesondere einen mit der Hilfsmaschine elektrisch verbundenen Energiespeicher, beispielsweise einen chemischen, elektrischen oder elektro-mechanischen Energiespeicher, aufweist (Anspruch 8). Der mit der Hilfsmaschine verbundene Energiespeicher ist dabei bevorzugt nicht mit dem Bordnetz der Arbeitsmaschine verbunden.

Wie bereits angedeutet, kann die Hilfsmaschine als elektrischer Generator betrieben werden (Anspruch 9), speziell für den Fall, dass über den dritten Teilantriebsstrang Antriebsleistung der Verbrennungskraftmaschine an die Hilfsmaschine geleitet werden soll.

Gemäß der Ausgestaltung nach Anspruch 10 ist die Hilfsmaschine indirekt, insbesondere über ein Getriebe und/oder einen Riemen, oder direkt mit der Verbrennungskraftmaschine verbunden. Die mechanische Verbindung ist bevorzugt so konfiguriert, dass die Hilfsmaschine die Drehzahl der Abtriebswelle erhöht oder verringert, wobei das Drehmoment, das von der Verbrennungskraftmaschine auf die Abtriebswelle wirkt, insbesondere konstant bleibt. Grundsätzlich ist aber auch denkbar, dass die Hilfsmaschine das Drehmoment, das an triebsseitig insgesamt (durch Verbrennungskraftmaschine und Hilfsmaschine zusammen) auf die Abtriebswelle wirkt, erhöht oder verringert, wobei die Drehzahl der Abtriebswelle insbesondere konstant bleibt.

Schließlich ist gemäß der Ausgestaltung nach Anspruch 11 vorgesehen, dass die Antriebsanordnung mindestens einen Sensor zum Ermitteln der Drehzahl und/oder des Drehmoments an der Abtriebswelle der Verbrennungskraftmaschine aufweist, wobei der jeweilige Sensor insbesondere mit der Regeleinrichtung elektrisch verbunden ist. Der jeweilige Sensor und/oder die Regeleinrichtung ist bzw. sind insbesondere mit dem Bordnetz der Arbeitsmaschine verbunden.

Nach einer weiteren Lehre gemäß Anspruch 12, der eigenständige Bedeutung zukommt, wird ein Verfahren zum Betrieb einer landwirtschaftlichen Arbeitsmaschine, insbesondere einer wie zuvor definierten landwirtschaftlichen Arbeitsmaschine, beansprucht, bei dem eine abgegebene Leistung bzw. ein Betriebspunkt einer Verbrennungskraftmaschine der Arbeitsmaschine eingestellt wird, und bei dem mindestens ein Leistungsverbraucher der Arbeitsmaschine (von der Verbrennungskraftmaschine) betrieben wird. Dabei wird erfindungsgemäß eine Hilfsmaschine der Arbeitsmaschine so geregelt, dass die voreingestellte Leistung der Verbrennungskraftmaschine bei variierendem Leistungsbedarf des ersten Leistungsverbrauchers im Wesentlichen beibehalten wird.

Im Folgenden wird die Erfindung anhand einer lediglich ein Ausführungsbeispiel darstellenden Zeichnung näher erläutert. In der Zeichnung zeigt
- Fig. 1: eine landwirtschaftliche Arbeitsmaschine gemäß der vorliegenden Erfindung während des Bearbeitens des Feldbestands und
- Fig. 2: ein Kennlinien-Diagramm der Arbeitsmaschine gemäß Fig. 1.

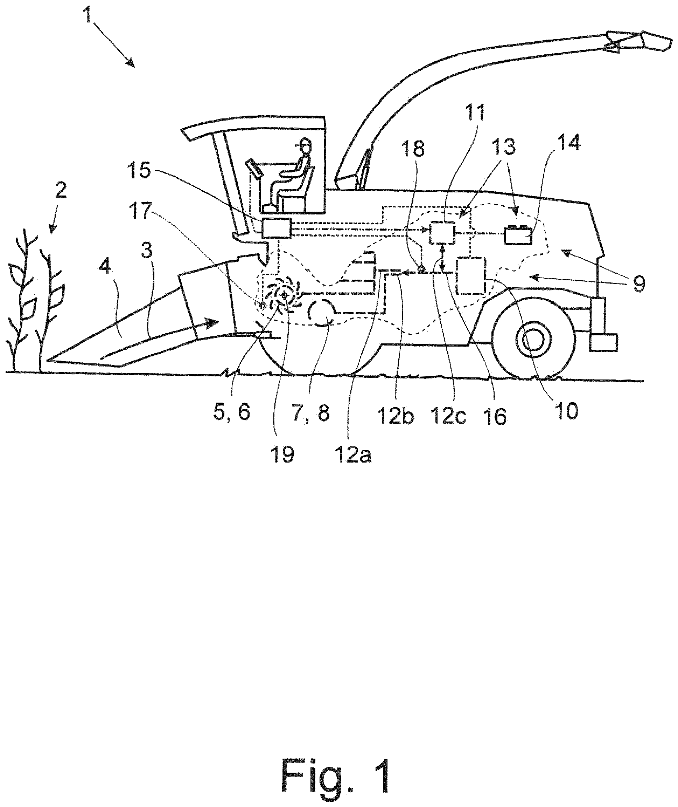

In Fig. 1 ist eine erfindungsgemäße landwirtschaftliche Arbeitsmaschine 1 in Form eines Feldhäckslers dargestellt. Die Arbeitsmaschine 1 wird durch einen Feldbestand 2, beispielsweise ein Maisfeld, gefahren. Ein Gutfluss 3 aus Pflanzenteilen wird während des Betriebs durch einen Einzugskanal 4 eingezogen und zum Zwecke der weiteren Zerkleinerung zu einem ersten Leistungsver braucher 5, hier einem Arbeitsaggregat 6 in Form einer Häckslertrommel, geführt.

Die Arbeitsmaschine 1 ist als selbstfahrende Erntemaschine ausgebildet und weist als zweiten Leistungsverbraucher 7 einen Fahrantrieb 8 mit einer Antriebsachse für Antriebsräder (nicht dargestellt) auf.

Außerdem verfügt die Arbeitsmaschine 1 über eine Antriebsanordnung 9, die zum einen als Hauptmaschine eine Verbrennungskraftmaschine 10 in Form eines Dieselmotors und zum anderen eine Hilfsmaschine 11 in Form einer Elektromaschine aufweist. Die Antriebsanordnung 9 dient sowohl zum Antrieb des Fahrantriebs 8 als auch, und zwar gleichzeitig, zum Antrieb verschiedener Arbeitsaggregate 6.

Dazu ist als Bestandteil der Antriebsanordnung 9 ein von der Verbrennungskraftmaschine 10 ausgehender Antriebsstrang 12 vorgesehen, der zumindest auch dem Ausleiten von Antriebsleistung der Verbrennungskraftmaschine 10 an die Leistungsverbraucher 5 und 7 dient. Der Antriebsstrang 12 weist zumindest drei Teilantriebsstränge 12a, 12b und 12c auf, in die sich dieser aufteilt. Die Hilfsmaschine 11 ist an den Antriebsstrang 12 angekoppelt, beispielsweise über ein Getriebe (nicht dargestellt).

Der erste Teilantriebsstrang 12a ist zum Übertragen von Antriebsleistung der Verbrennungskraftmaschine 10 an den ersten Leistungsverbraucher 5, das heißt das Arbeitsaggregat 6 (Häckslertrommel), konfiguriert. Ein zweiter Teilantriebsstrang 12b ist zum Übertragen von Antriebsleistung der Verbrennungskraftmaschine 10 an den zweiten Leistungsverbraucher 7, das heißt den Fahrantrieb 8, konfiguriert. Ein dritter Teilantriebsstrang 12c ist zum wechselseitigen Austausch von Antriebsleistung zwischen der Verbrennungskraftmaschine 10 und der Hilfsmaschine 11 konfiguriert, was im weiteren noch erläutert wird.

Die Hilfsmaschine 11, die als Elektromaschine ausgebildet ist, ist Bestandteil eines Hybridsystems 13, das einen mit der Hilfsmaschine 11 elektrisch verbundenen Energiespeicher 14 aufweist. Die Hilfsmaschine 11 kann, wenn überschüssige Leistung von der Verbrennungskraftmaschine 10 zur Verfügung steht, als elektrischer Generator betrieben werden. Insbesondere kann die Hilfsmaschine 11 den Antriebsstrang 12 jedoch unterstützen, was im Weiteren noch erläutert wird.

In Fig. 1 ist außerdem noch eine Regeleinrichtung 15 dargestellt, die Bestandteil der Antriebsanordnung 9 ist und die die Regelung der Hilfsmaschine 11 übernimmt. So zeichnet sich die erfindungsgemäße Arbeitsmaschine 1 dadurch aus, dass die Hilfsmaschine 11 mit Hilfe der Regeleinrichtung 15 so geregelt wird, dass bei insbesondere voreingestellter von der Verbrennungskraftmaschine 10 abgegebener Leistung und bei variierendem Leistungsbedarf des mindestens einen Leistungsverbrauchers 5 die Drehzahl oder das Drehmoment an einer Abtriebswelle 16 der Verbrennungskraftmaschine 10 auf einen voreingestellten Wert oder Wertebereich gehalten wird. Die Voreinstellung der von der Verbrennungskraftmaschine 10 abgegebenen Leistung erfolgt vorzugsweise durch einen separaten, der Verbrennungskraftmaschine 10 zugeordneten, aus dem Stand der Technik an sich bekannten Regelkreis.

Die Regeleinrichtung 15 regelt die Hilfsmaschine 11 vorzugsweise so, dass die Hilfsmaschine 11 einer lastwechselbedingten Änderung der Drehzahl an der Abtriebswelle 16 der Verbrennungskraftmaschine 10 entgegenwirkt. Mit Hilfe der Regeleinrichtung 15 wird die Hilfsmaschine 11 also so geregelt, dass bei einem Anstieg der Drehzahl an der Abtriebswelle 16 der Verbrennungskraftmaschine 10 die Hilfsmaschine 11 eine Verringerung der Drehzahl an der Abtriebswelle 16 der Verbrennungskraftmaschine 10 bewirkt. So ist der Fall denkbar, dass das Arbeitsaggregat 6 einen verminderten Leistungsbedarf hat, beispielsweise aufgrund eines geringeren Gutflusses 3 im Einzugskanal 4, wenn die Arbeitsmaschine 1 in einen weniger dichten Feldbestand 2 fährt. Der verringerte Leistungsbedarf des Arbeitsaggregats 6 wird mittels Sensoren 17 und 18 ermittelt, indem ein erster Sensor 17 die Drehzahl des Arbeitsaggregats 6, das heißt der Antriebswelle 19, die das Arbeitsaggregat 6 antreibt, und ein zweiter Sensor 18 die Drehzahl an der Abtriebswelle 16 der Verbrennungskraftmaschine 10 ermittelt. Grundsätzlich reicht hier ein Sensor 18 zur Ermittlung der Drehzahl an der Abtriebswelle 16 aus.

Die Sensoren 17 und 18 senden den Messergebnissen entsprechende Daten an die Regeleinrichtung 15, die daraufhin die Hilfsmaschine 11 so regelt, dass diese als elektrischer Generator der Abtriebswelle 16 der Verbrennungskraftmaschine 10 Leistung aufnimmt und dadurch die an der Antriebswelle 19 des Arbeitsaggregats 6 zur Verfügung stehende Leistung verringert. Dies bewirkt, dass sich die Drehzahl der Abtriebswelle 16 der Verbrennungskraftmaschine 10 und dadurch die der Antriebswelle 19 des Arbeitsaggregats 6 automatisch wieder auf den vorherigen Wert verringert. Die von der Hilfsmaschine 11 dadurch erzeugte Energie wird in dem elektrischen Energiespeicher 14 gespeichert.

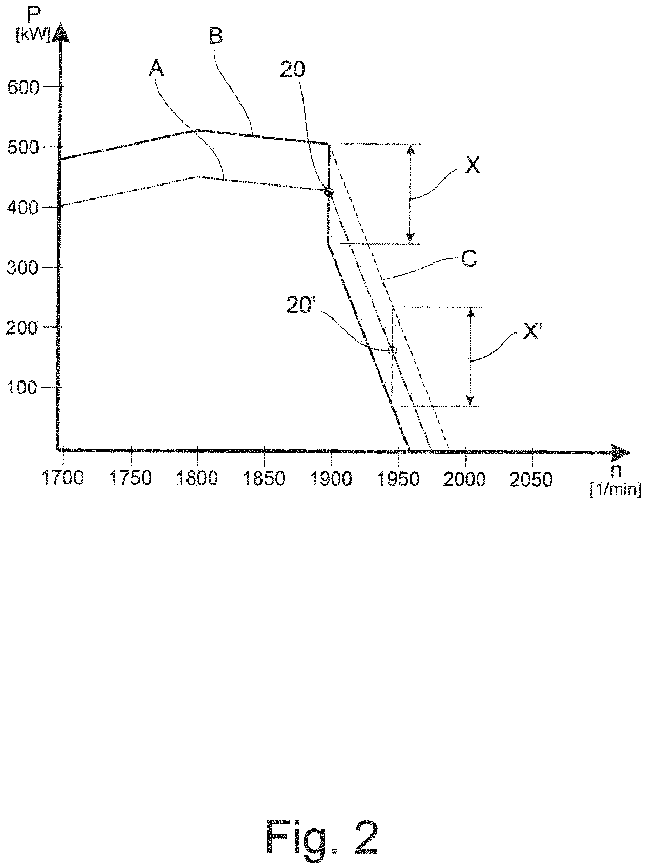

Durch diese Maßnahme der Hilfsmaschine 11 kann die Verbrennungskraftmaschine 10 konstant in einem vorgegebenen, für eine bestimmte Betriebssituation optimalen Betriebspunkt 20 bzw. 20' betrieben werden, was in Fig. 2 gezeigt ist und im weiteren noch erläutert wird.

Unabhängig vom vorangehenden Fall ist die Hilfsmaschine 11 auch so regelbar, dass bei einem Abfall der Drehzahl an der Abtriebswelle 16 der Verbrennungskraftmaschine 10 die Hilfsmaschine 11 eine Erhöhung der Drehzahl an der Abtriebswelle 16 der Verbrennungskraftmaschine 10 bewirkt. So kann es vorkommen, dass, wenn die Arbeitsmaschine 1 in dem vorgegebenen Betriebspunkt 20 bzw. 20' betrieben wird, das Arbeitsaggregat 6 einen erhöhten Leistungsbedarf hat, beispielsweise aufgrund eines Anstiegs der Dichte des Gutflusses 3 im Einzugskanal 4, wenn die Arbeitsmaschine 1 in einen besonders dichten Feldbestand 2 fährt. Der erhöhte Leistungsbedarf des Arbeitsaggregats 6 kann ebenfalls mittels der beiden Sensoren 17 und 18 festgestellt werden. Grundsätzlich ist es auch für diesen Fall möglich, dass lediglich die Drehzahl an der Abtriebswelle 16 der Verbrennungskraftmaschine 10 ermittelt wird.

Die Sensoren 17 und 18 senden den Messergebnissen entsprechende Daten an die Regeleinrichtung 15, die daraufhin die Hilfsmaschine 11 so regelt, dass sie der Abtriebswelle 16 der Verbrennungskraftmaschine 10 und dadurch auch der Antriebswelle 19 des Arbeitsaggregats 6 Leistung zuführt. Dies bewirkt, dass sich die Drehzahl der Abtriebswelle 16 der Verbrennungskraftmaschine 10 und dadurch die der Antriebswelle 19 des Arbeitsaggregats 6 automatisch wieder auf den vorherigen Wert erhöht.

Durch diese Unterstützung des Antriebsstrangs 12 durch die Hilfsmaschine 11 kann die Verbrennungskraftmaschine 10 konstant in dem vorgegebenen Betriebspunkt 20 bzw. 20' betrieben werden, was ebenfalls in Fig. 2 gezeigt ist.

In dem Diagramm in Fig. 2 ist zunächst die Motorkennlinie A der Verbrennungskraftmaschine 10 dargestellt. Danach hat die Verbrennungskraftmaschine 10 bei 1700 1/min eine Leistung von 400 kW, bei 1800 1/min eine Leistung von 450 kW (Maximalleistung) und bei 1900 1/min eine Leistung von 430 kW (Nennleistung). Ab diesem Punkt, der einen möglichen Betriebspunkt 20 definiert, fällt die Leistung mit zunehmender Drehzahl ab.

Ferner ist eine Kennlinie B dargestellt, die dem zuvor erläuterten Fall entspricht, bei dem die Hilfsmaschine 11 zusätzlich zur Verbrennungskraftmaschine 10 eingesetzt wird. Die Kennlinie B zeigt die insgesamt von der Antriebsanordnung 9, also von der Verbrennungskraftmaschine 10 und der Hilfsmaschine 11 an den mindestens einen Leistungsverbraucher 5 abgegebene mechanische Leistung.

Grundsätzlich kann mit Hilfe der Hilfsmaschine 11 die Gesamtleistung der Arbeitsmaschine 1 in dem dargestellten Ausführungsbeispiel für jede Drehzahl der Abtriebswelle 16 der Verbrennungskraftmaschine 10 um 80 kW erhöht werden, so dass die Maximalleistung beispielsweise bei 530 kW liegt.

Bei der Nenndrehzahl der Verbrennungskraftmaschine 10 von 1900 1/min kann die Gesamtleistung der Arbeitsmaschine 1 auf 510 kW erhöht werden, wobei die Leistung der Verbrennungskraftmaschine 10 konstant bleibt. Das heißt, trotz einer erhöhten Gesamtleistung der Arbeitsmaschine 1 kann die Verbrennungskraftmaschine 10 in dem vorgegebenen Betriebspunkt betrieben werden.

Alternativ kann bei der Nenndrehzahl der Verbrennungskraftmaschine 10 von 1900 1/min die Gesamtleistung der Arbeitsmaschine 1 auch auf 350 kW verringert werden, indem die Hilfsmaschine 11 als elektrischer Generator betrieben wird, wobei die Leistung der Verbrennungskraftmaschine 10 auch dann konstant bleibt. Auch hier behält die Verbrennungskraftmaschine 10 den vorgegebenen Betriebspunkt bei.

Mit anderen Worten kann die Gesamtleistung der Arbeitsmaschine 1 in einem Bereich X von 160 kW um den Betriebspunkt 20 variieren, ohne den Betriebspunkt 20 oder die Leistung der Verbrennungskraftmaschine 10 zu verändern. Die Verbrennungskraftmaschine 10 kann auf diese Weise mit besonders geringem Kraftstoffverbrauch und entsprechend geringen Schadstoffemissionen betrieben werden.

Außerdem ist in dem Diagramm in Fig. 2 noch dargestellt, dass im Bedarfsfall auch ein alternativer Betriebspunkt 20' der Verbrennungskraftmaschine 10, manuell oder automatisch, eingestellt werden kann. Auch hier kann die Gesamtleistung der Arbeitsmaschine 1 in einem Bereich X' von 160 kW um den Betriebspunkt 20' variieren, ohne den Betriebspunkt 20' oder die Leistung der Verbrennungskraftmaschine 10 zu verändern. Entsprechendes gilt für jeden theoretischen Betriebspunkt bei Drehzahlen oberhalb der Nenndrehzahl von 1900 1/min, was die gestrichelte Hilfslinie C zeigt. So ist bei jeder Drehzahl oberhalb der Nenndrehzahl eine Leistungserhöhung oder -verringerung um jeweils 80 kW mittels der Hilfsmaschine 11 möglich, ohne den der jeweiligen Drehzahl entsprechenden Betriebspunkt bzw. die der jeweiligen Drehzahl entsprechende Leistung der Verbrennungskraftmaschine 10 zu verändern.

### Bezugszeichen

- 1: landwirtschaftliche Arbeitsmaschine
- 2: Feldbestand
- 3: Gutfluss
- 4: Einzugskanal
- 5: erster Leistungsverbraucher
- 6: Arbeitsaggregat
- 7: zweiter Leistungsverbraucher
- 8: Fahrantrieb
- 9: Antriebsanordnung
- 10: Verbrennungskraftmaschine
- 11: Hilfsmaschine
- 12: Antriebsstrang
- 12a: erster Teilantriebsstrang
- 12b: zweiter Teilantriebsstrang
- 12c: dritter Teilantriebsstrang
- 13: Hybridsystem
- 14: Energiespeicher
- 15: Regeleinrichtung
- 16: Abtriebswelle
- 17: erster Sensor
- 18: zweiter Sensor
- 19: Antriebswelle
- 20: Betriebspunkt
- 20': Betriebspunkt
- A: Motorkennlinie
- B: Kennlinie
- C: Hilfslinie
- X: Leistungsbereich
- X': Leistungsbereich

## Patentansprüche

1. Landwirtschaftliche Arbeitsmaschine, insbesondere Erntemaschine, wobei eine Antriebsanordnung (9) mit einer Verbrennungskraftmaschine (10) und einer Hilfsmaschine (11) vorgesehen ist und wobei mindestens ein Leistungsverbraucher (5, 7) vorgesehen ist, der von der Antriebsanordnung (9) antreibbar ist,
**dadurch gekennzeichnet,**
**dass** die Antriebsanordnung (9) eine Regeleinrichtung (15) aufweist, die die Hilfsmaschine (11) derart regelt, dass bei variierendem Leistungsbedarf des mindestens einen Leistungsverbrauchers (5,7) die Drehzahl oder das Drehmoment an einer Abtriebswelle (16) der Verbrennungskraftmaschine (10) auf einen voreingestellten Wert oder Wertebereich gehalten wird, wobei die Regeleinrichtung (15) die Hilfsmaschine (11) so regelt, dass die Hilfsmaschine (11) einer lastwechselbedingten Änderung der Drehzahl an der Abtriebswelle (16) der Verbrennungskraftmaschine (10) in der Weise entgegenwirkt, dass bei einem Abfall der Drehzahl an der Abtriebswelle (16) der Verbrennungskraftmaschine (10) die Hilfsmaschine (11) eine Erhöhung der Drehzahl an der Abtriebswelle (16) der Verbrennungskraftmaschine (10) bewirkt und dass die Regeleinrichtung (15) derart konfiguriert ist, dass sie die Hilfsmaschine (11) als elektrischen Generator betreibt, sobald die Drehzahl an der Abtriebswelle (16) der Verbrennungskraftmaschine (10) lastwechselbedingt ansteigt.

2. Landwirtschaftliche Arbeitsmaschine nach Anspruch 1, **dadurch gekennzeichnet, dass** die Regeleinrichtung (15) die Hilfsmaschine (11) derart regelt, dass bei voreingestellter von der Verbrennungskraftmaschine (10) abgegebener Leistung und bei variierendem Leistungsbedarf des mindestens einen Leistungsverbrauchers (5,7) die Drehzahl oder das Drehmoment an einer Abtriebswelle (16) der Verbrennungskraftmaschine (10) auf einen voreingestellten Wert oder Wertebereich gehalten wird.

3. Landwirtschaftliche Arbeitsmaschine nach einem der vorhergehenden Ansprüche, **dadurch gekennzeichnet, dass** der Leistungsverbraucher (7) bzw. einer der Leistungsverbraucher (7) ein Arbeitsaggregat (6) der Arbeitsmaschine (1) ist, das insbesondere gewählt ist aus der Gruppe umfassend linear angetriebene Arbeitsaggregate (6) und rotatorisch angetriebene Arbeitsaggregate (6).

4. Landwirtschaftliche Arbeitsmaschine nach einem der vorhergehenden Ansprüche, **dadurch gekennzeichnet, dass** der Leistungsverbraucher (7) bzw. einer der Leistungsverbraucher (7) von einem Fahrantrieb (8) der Arbeitsmaschine (1) gebildet wird.

5. Landwirtschaftliche Arbeitsmaschine nach einem der vorhergehenden Ansprüche, **dadurch gekennzeichnet, dass** die Hilfsmaschine (11) an einen Antriebsstrang (12) der Antriebsanordnung (9) angekoppelt ist, der zumindest auch zum Ausleiten von Antriebsleistung der Verbrennungskraftmaschine (10) an den oder die Leistungsverbraucher (5, 7) konfiguriert ist.

6. Landwirtschaftliche Arbeitsmaschine nach Anspruch 5, **dadurch gekennzeichnet, dass** der Antriebsstrang (12) mindestens zwei Teilantriebsstränge (12a, 12b, 12c) und mindestens zwei Leistungsverbraucher (5, 7) aufweist, von denen
- ein erster Teilantriebsstrang (12a) zum Übertragen von Antriebsleistung der Verbrennungskraftmaschine (10) an einen ersten Leistungsverbraucher (5,7) konfiguriert ist und/oder
- ein zweiter Teilantriebsstrang (12b) zum Übertragen von Antriebsleistung der Verbrennungskraftmaschine (10) an einen zweiten Leistungsverbraucher (7) konfiguriert ist und/oder
- ein dritter Teilantriebsstrang (12c) zum Austausch von Antriebsleistung zwischen der Verbrennungskraftmaschine (10) und der Hilfsmaschine (11) konfiguriert ist.

7. Landwirtschaftliche Arbeitsmaschine nach einem der vorhergehenden Ansprüche, **dadurch gekennzeichnet, dass** die Hilfsmaschine (11) eine Elektromaschine ist.

8. Landwirtschaftliche Arbeitsmaschine nach einem der vorhergehenden Ansprüche, **dadurch gekennzeichnet, dass** die Hilfsmaschine (11) Bestandteil eines Hybridsystems (13) ist, wobei das Hybridsystem (13) einen mit der Hilfsmaschine (11) elektrisch verbundenen Energiespeicher (14) aufweist.

9. Landwirtschaftliche Arbeitsmaschine nach einem der vorhergehenden Ansprüche, **dadurch gekennzeichnet, dass** die Hilfsmaschine (11) als elektrischer Generator betreibbar ist.

10. Landwirtschaftliche Arbeitsmaschine nach einem der vorhergehenden Ansprüche, **dadurch gekennzeichnet, dass** die Hilfsmaschine (11) indirekt, insbesondere über ein Getriebe und/oder einen Riemen, oder direkt mit der Verbrennungskraftmaschine (10) verbunden ist.

11. Landwirtschaftliche Arbeitsmaschine nach einem der vorhergehenden Ansprüche, **dadurch gekennzeichnet, dass** die Antriebsanordnung (9) mindestens einen Sensor (18) zum Ermitteln der Drehzahl und/oder des Drehmoments an der Abtriebswelle (16) der Verbrennungskraftmaschine (10) aufweist, wobei der jeweilige Sensor (18) insbesondere mit der Regeleinrichtung (15) elektrisch verbunden ist.

12. Verfahren zum Betrieb einer landwirtschaftlichen Arbeitsmaschine (1), insbesondere einer landwirtschaftlichen Arbeitsmaschine (1) nach einem der vorhergehenden Ansprüche, wobei die Arbeitsmaschine (1) eine Antriebsanordnung (9) mit einer Verbrennungskraftmaschine (10) und einer Hilfsmaschine (11) aufweist und wobei die Arbeitsmaschine (1) mindestens einen Leistungsverbraucher (5, 7) aufweist, der von der Antriebsanordnung (9) angetrieben wird,
**dadurch gekennzeichnet,**
**dass** die Hilfsmaschine (11) derart geregelt wird, dass bei variierendem Leistungsbedarf des mindestens einen Leistungsverbrauchers (5,7) die Drehzahl oder das Drehmoment an einer Abtriebswelle (16) der Verbrennungskraftmaschine (10) auf einen voreingestellten Wert oder Wertebereich gehalten wird und wobei die Regeleinrichtung (15) die Hilfsmaschine (11) so regelt, dass die Hilfsmaschine (11) einer lastwechselbedingten Änderung der Drehzahl an der Abtriebswelle (16) der Verbrennungskraftmaschine (10) in der Weise entgegenwirkt, dass bei einem Abfall der Drehzahl an der Abtriebswelle (16) der Verbrennungskraftmaschine (10) die Hilfsmaschine (11) eine Erhöhung der Drehzahl an der Abtriebswelle (16) der Verbrennungskraftmaschine (10) bewirkt und dass die Regeleinrichtung (15) derart konfiguriert ist, dass sie die Hilfsmaschine (11) als elektrischen Generator betreibt, sobald die Drehzahl an der Abtriebswelle (16) der Verbrennungskraftmaschine (10) lastwechselbedingt ansteigt.

13. Verfahren nach Anspruch 12, **dadurch gekennzeichnet, dass** die Hilfsmaschine (11) derart geregelt wird, dass bei voreingestellter von der Verbrennungskraftmaschine (10) abgegebener Leistung und bei variierendem Leistungsbedarf des mindestens einen Leistungsverbrauchers (5,7) die Drehzahl oder das Drehmoment an einer Abtriebswelle (16) der Verbrennungskraftmaschine (10) auf einen voreingestellten Wert oder Wertebereich gehalten wird.

## Claims

1. An agricultural working machine, in particular a harvester, wherein there is provided a drive arrangement (9) having an internal combustion engine (10) and an auxiliary machine (11), and wherein there is provided at least one power consumer (5, 7) drivable by the drive arrangement (9),
**characterised in that**
the drive arrangement (9) has a closed-loop control device (15) which controls the auxiliary machine (11) in such a way that with a varying power requirement on the part of the at least one power consumer (5, 7) the rotary speed or the torque at a drive output shaft (16) of the internal combustion engine (10) is held at a preset value or value range, wherein the control device (15) controls the auxiliary machine (11) in such a way that the auxiliary machine (11) counteracts an alteration due to a change in load of the rotary speed at the drive output shaft (16) of the internal combustion engine (10) in such a way that upon a drop in the rotary speed at the drive output shaft (16) of the internal combustion engine (10) the auxiliary machine (11) causes an increase in the rotary speed at the drive output shaft (16) of the internal combustion engine (10) and the control device (15) is so configured that it operates the auxiliary machine (11) as an electric generator as soon as the rotary speed at the drive output shaft (16) of the internal combustion engine (10) rises due to a change in load.

2. An agricultural working machine according to claim 1 **characterised in that** the control device (15) controls the auxiliary machine (11) in such a way that at a preset power delivered by the internal combustion engine (10) and with a varying power requirement of the at least one power consumer (5, 7) the rotary speed or the torque at a drive output shaft (16) of the internal combustion engine (10) is held at a preset value or value range.

3. An agricultural working machine according to one of the preceding claims **characterised in that** the power consumer (7) or one of the power consumers (7) is a working assembly (6) of the working machine (1), which in particular is selected from the group including linearly driven working assemblies (6) and rotationally driven working assemblies (6).

4. An agricultural working machine according to one of the preceding claims **characterised in that** the power consumer (7) or one of the power consumers (7) is formed by a travel drive (8) of the working machine (1).

5. An agricultural working machine according to one of the preceding claims **characterised in that** the auxiliary machine (11) is coupled to a drive train (12) of the drive arrangement (9), which is also configured at least for delivering drive power of the internal combustion engine (10) to the power consumer or consumers (5, 7).

6. An agricultural working machine according to claim 5 **characterised in that** the drive train (12) has at least two drive train portions (12a, 12b, 12c) and at least two power consumers (5, 7), of which
- a first drive train portion (12a) is configured for transmitting drive power of the internal combustion engine (10) to a first power consumer (5, 7), and/or
- a second drive train portion (12b) is configured for transmitting drive power of the internal combustion engine (10) to a second power consumer (7), and/or
- a third drive train portion (12c) is configured for exchanging drive power between the internal combustion engine (10) and the auxiliary machine (11).

7. An agricultural working machine according to one of the preceding claims **characterised in that** the auxiliary machine (11) is an electric machine.

8. An agricultural working machine according to one of the preceding claims **characterised in that** the auxiliary machine (11) is a component of a hybrid system (13), wherein the hybrid system (13) has an energy storage means (14) electrically connected to the auxiliary machine (11).

9. An agricultural working machine according to one of the preceding claims **characterised in that** the auxiliary machine (11) is operable as an electric generator.

10. An agricultural working machine according to one of the preceding claims **characterised in that** the auxiliary machine (11) is connected indirectly, in particular by way of a transmission and/or a belt, or directly, to the internal combustion engine (10).

11. An agricultural working machine according to one of the preceding claims **characterised in that** the drive arrangement (9) has at least one sensor (18) for determining the rotary speed and/or the torque at the drive output shaft (16) of the internal combustion engine (10), wherein the respective sensor (18) is electrically connected in particular to the control device (15).

12. A method of operating an agricultural working machine (1), in particular an agricultural working machine (1) according to one of the preceding claims, wherein the working machine (1) has a drive arrangement (9) having an internal combustion engine (10) and an auxiliary machine (11) and wherein the working machine (1) has at least one power consumer (5, 7) driven by the drive arrangement (9),
**characterised in that**
the auxiliary machine (11) is controlled in such a way that with a varying power requirement on the part of the at least one power consumer (5, 7) the rotary speed or the torque at a drive output shaft (16) of the internal combustion engine (10) is held at a preset value or value range, wherein the control device (15) controls the auxiliary machine (11) in such a way that the auxiliary machine (11) counteracts an alteration due to a change in load of the rotary speed at the drive output shaft (16) of the internal combustion engine (10) in such a way that upon a drop in the rotary speed at the drive output shaft (16) of the internal combustion engine (10) the auxiliary machine (11) causes an increase in the rotary speed at the drive output shaft (16) of the internal combustion engine (10) and the control device (15) is so configured that it operates the auxiliary machine (11) as an electric generator as soon as the rotary speed at the drive output shaft (16) of the internal combustion engine (10) rises due to a change in load.

13. A method according to claim 12 **characterised in that** the auxiliary machine (11) is controlled in such a way that with a preset power delivered by the internal combustion engine (10) and with a varying power requirement on the part of the at least one power consumer (5, 7) the rotary speed or the torque at a drive output shaft (16) of the internal combustion engine (10) is held at a preset value or value range.

## Revendications

1. Machine de travail agricole, en particulier machine de récolte, un agencement d'entraînement (9) avec une machine motrice à combustion (10) et avec une machine auxiliaire (11) étant prévu, et au moins un consommateur de puissance (5, 7) étant prévu, lequel peut être entraîné par l'agencement d'entraînement (9), **caractérisée en ce que** l'agencement d'entraînement (9) comporte un équipement de régulation (15) qui régule la machine auxiliaire (11) de façon que, en cas de besoin de puissance variable du au moins consommateur de puissance (5, 7), la vitesse de rotation ou le couple de rotation au niveau de l'arbre de sortie (16) de la machine motrice à combustion (10) soit maintenu à une valeur ou dans une plage de valeurs préréglées, l'équipement de régulation (15) régulant la machine auxiliaire (11) de façon que la machine auxiliaire (11) contrebalance une variation de la vitesse de rotation due à l'alternance de charge au niveau de l'arbre de sortie (16) de la machine motrice à combustion (10), de façon qu'en cas de diminution de la vitesse de rotation au niveau de l'arbre de sortie (16) de la machine motrice à combustion (10), la machine auxiliaire (11) provoque une élévation de la vitesse de rotation au niveau de l'arbre de sortie (16) de la machine motrice à combustion (10), et **en ce que** l'équipement de régulation (15) est configuré de façon à opérer la machine auxiliaire (11) comme un générateur électrique dès que la vitesse de rotation au niveau de l'arbre de sortie (16) de la machine motrice à combustion (10) augmente sous l'effet de l'alternance de charge.

2. Machine de travail agricole selon la revendication 1, **caractérisée en ce que** l'équipement de régulation (15) régule la machine auxiliaire (11) de façon qu'en présence d'une puissance préréglée fournie par la machine motrice à combustion (10) et d'un besoin de puissance variable du au moins un consommateur de puissance (5, 7), la vitesse de rotation ou le couple de rotation au niveau d'un arbre de sortie (16) de la machine motrice à combustion (10) soit maintenu à une valeur ou dans une plage de valeurs préréglées.

3. Machine de travail agricole selon une des revendications précédentes, **caractérisée en ce que** le consommateur de puissance (7), respectivement un des consommateurs de puissance (7) est un organe de travail (6) de la machine de travail (1) qui, en particulier, est choisi parmi le groupe comprenant des organes de travail à entraînement linéaire (6) et des organes de travail à entraînement rotatif (6).

4. Machine de travail agricole selon une des revendications précédentes, **caractérisée en ce que** le consommateur de puissance (7), respectivement un des consommateurs de puissance (7) est constitué par un groupe propulseur (8) de la machine de travail (1).

5. Machine de travail agricole selon une des revendications précédentes, **caractérisée en ce que** la machine auxiliaire (11) est accouplée à une chaîne de transmission (12) de l'agencement d'entraînement (9), laquelle est au moins aussi configurée pour acheminer la puissance d'entraînement de la machine motrice à combustion (10) au ou aux consommateurs de puissance (5, 7) .

6. Machine de travail agricole selon la revendication 5, **caractérisée en ce que** la chaîne de transmission (12) comporte au moins deux chaînes de transmission partielles (12a, 12b, 12c) et au moins deux consommateurs de puissance (5, 7), parmi lesquels
- une première chaîne de transmission partielle (12a) est configurée pour transmettre de la puissance d'entraînement de la machine motrice à combustion (10) à un premier consommateur de puissance (5, 7) et/ou
- une deuxième chaîne de transmission partielle (12b) est configurée pour transmettre de la puissance d'entraînement de la machine motrice à combustion (10) à un deuxième consommateur de puissance (7) et/ou
- une troisième chaîne de transmission partielle (12c) est configurée pour échanger de la puissance d'entraînement entre la machine motrice à combustion (10) et la machine auxiliaire (11).

7. Machine de travail agricole selon une des revendications précédentes, **caractérisée en ce que** la machine auxiliaire (11) est une machine électrique.

8. Machine de travail agricole selon une des revendications précédentes, **caractérisée en ce que** la machine auxiliaire (11) fait partie d'un système hybride (13), le système hybride (13) comportant un accumulateur d'énergie (14) relié électriquement à la machine auxiliaire (11).

9. Machine de travail agricole selon une des revendications précédentes, **caractérisée en ce que** la machine auxiliaire (11) peut être opérée comme générateur électrique.

10. Machine de travail agricole selon une des revendications précédentes, **caractérisée en ce que** la machine auxiliaire (11) est reliée à la machine motrice à combustion (10) indirectement, en particulier par l'intermédiaire d'une transmission et/ou d'une courroie, ou directement.

11. Machine de travail agricole selon une des revendications précédentes, **caractérisée en ce que** l'agencement d'entraînement (9) comporte au moins un capteur (18) pour déterminer la vitesse de rotation et/ou le couple de rotation au niveau de l'arbre de sortie (16) de la machine motrice à combustion (10), le capteur (18) étant relié électriquement à l'équipement de régulation (15).

12. Procédé pour opérer une machine de travail agricole (1), en particulier une machine de travail agricole (1) selon une des revendications précédentes, la machine de travail (1) comportant un agencement d'entraînement (9) avec une machine motrice à combustion (10) et avec une machine auxiliaire (11), et la machine de travail (1) comportant au moins un consommateur de puissance (5, 7) qui est entraîné par l'agencement d'entraînement (9), **caractérisé en ce que** la machine auxiliaire est régulée de façon que, en cas de besoin de puissance variable du au moins un consommateur de puissance (5, 7), la vitesse de rotation ou le couple de rotation au niveau de l'arbre de sortie (16) de la machine motrice à combustion (10) soit maintenu à une valeur ou dans une plage de valeurs préréglées, l'équipement de régulation (15) régulant la machine auxiliaire (11) de façon que la machine auxiliaire (11) contrebalance une variation de la vitesse de rotation due à l'alternance de charge au niveau de l'arbre de sortie (16) de la machine motrice à combustion (10), de façon qu'en cas de diminution de la vitesse de rotation au niveau de l'arbre de sortie (16) de la machine motrice à combustion (10), la machine auxiliaire (11) provoque une élévation de la vitesse de rotation au niveau de l'arbre de sortie (16) de la machine motrice à combustion (10), et **en ce que** l'équipement de régulation (15) est configuré de façon à opérer la machine auxiliaire (11) comme un générateur électrique dès que la vitesse de rotation au niveau de l'arbre de sortie (16) de la machine motrice à combustion (10) augmente sous l'effet de l'alternance de charge.

13. Procédé selon la revendication 12, **caractérisé en ce que** la machine auxiliaire (11) est régulée de façon qu'en présence d'une puissance préréglée fournie par la machine motrice à combustion (10) et d'un besoin de puissance variable du au moins un consommateur de puissance (5, 7), la vitesse de rotation ou le couple de rotation au niveau d'un arbre de sortie (16) de la machine motrice à combustion (10) soit maintenu à une valeur ou dans une plage de valeurs préréglées.
